# EUROPÄISCHE PATENTSCHRIFT

(11) **EP 0 592 833 B1**
(45) Veröffentlichungstag und Bekanntmachung des Hinweises auf die Patenterteilung: **21.01.1998**
(21) Anmeldenummer: 93114898.5
(22) Anmeldetag: 16.09.1993
(51) Int. Cl.: F24F 5/00, F25B 9/00, B60H 1/00, B61D 27/00

(54) **Verfahren zum Heizen oder Kühlen eines Raumes**
Method of heating or cooling a space
Méthode pour refroidir ou chauffer un espace

(30) Priorität: 15.10.1992 DE 4235217
(43) Veröffentlichungstag der Anmeldung: 20.04.1994
(73) Patentinhaber: HAGENUK FAHRZEUGKLIMA GmbH, D-04435 Schkeuditz (DE); NORMALAIR -GARRETT LIMITED, Yeovil, Somerset BA20 2YB (GB)
(72) Erfinder: Adolph, Ulrich, Dr.-Ing., D-04159 Leipzig (DE); Eichholz, Stefan, D-24148 Kiel (DE); Riedel, Jochen, D-04159 Leipzig (DE); Giles, George Richard, South Petherton, Somerset TA1B 5ER (GB); Richards, Donald James, Yeovil, Somerset (GB)
(74) Vertreter: Köckeritz, Günter

(56) Entgegenhaltungen:
- DE-A- 3 837 052
- GB-A- 2 237 373
- US-A- 2 304 151
- US-A- 4 295 518

## Beschreibung

Die Erfindung betrifft ein Verfahren zum Heizen oder Kühlen eines Raumes insbesondere für den Einsatz in Reisezugwagen.

Die Aufgabe von Kaltluftmaschinen besteht in der Kühlung eines Raumes durch Nutzung der thermodynamischen Eigenschaften der Luft in einem Joule-Kreisprozeß. Zur Verwirklichung dieses Prozesses sind verschiedene Verfahren bekannt geworden. Eine einfache Schaltung verwirklicht einen geschlossenen Prozeß und besteht aus einem Aggregat mit einem Verdichter und einer Expansionsmaschinen sowie aus zwei Umgebungsluft-Wärmeübertragern auf der warmen und der kalten Seite (Bosnjakowic: "Technische Thermodynamik", Teil I, 4. Auflage, Leipzig u. Dresden Seite 291 - 295).
Zur Verbesserung des Nutzeffektes wurde dieses Grundverfahren weiter ergänzt durch mehrstufige Verdichtung mit und ohne Zwischenkühler, mit regenerativem Wärmetausch, durch Öffnung des Kreisprozesses auf der kalten, auf der warmen oder auf beiden Seiten (Kauffeld, König, Kruse: "Luft als Kältemittel", DKV-Tagungsbericht 1991, Seite 217 - 237).
Eine weitere Verbesserung beschreibt die DE-PS 31 39 398, indem in einem offenen Kaltluftmaschinenprozess mit zweistufiger Verdichtung die im Nachkühler kondensierende Luftfeuchtigkeit regenerativ dem Prozeß vor dem Verdichter der zweiten Stufe zumindest teilweise wieder zugeführt wird, um den Energieinhalt des Wassers durch Verdampfen zu nutzen und damit den Wirkungsgrad der Anlage zu verbessern. Allen diesen Verfahren haftet der Nachteil an, daß sie mehr Antriebsenergie je Kälteleistungseinheit benötigen als vergleichbare Kaltdampfmaschinenprozesse, so daß ihre Anwendung auf Spezialfälle beschränkt bleibt.
Weite Verbreitung haben Kaltluftmaschinen zur Kühlung von Flugzeugkabinen gefunden, wobei der energetische Vorteil auftritt, daß die Differenz der Leistungen von Turbine und Verdichter durch Zuführung von verdichteter Triebwerksluft aufgebracht wird, die für die Funktion des Triebwerkes ohnehin erzeugt werden muß. Andernfalls erweist sich die Energiebereitstellung über einen Verbrennungsprozeß als zu aufwendig.
Eine Erweiterung erfährt diese Lösung in der DE-PS 38 37 052 durch ein Verfahren zur gleichzeitigen Erzeugung von Wärme und Kälte mit Energiezufuhr in einer Brennkammer, zwei Turbinen-Expansionsmaschinenaggregaten und entsprechenden Wärmeübertragern.
Der Nachteil dieses Verfahrens besteht in der Notwendigkeit des gleichzeitigen Vorhandenseins eines Bedarfs von Wärme und Kälte, auch wenn durch Einschaltung eines Speichers eine gewisse Verschiebung der Kapazitäten möglich ist, allerdings zu Lasten der energetischen Effektivität.

Die US-A-4,295,518 beinhaltet eine Klimaanlage, die sich aus einer kombinierten Verdichter-Turbineneinheit mit zwischengeschaltetemm Wärmeübertrager, bestehend aus Umgebungsluftwärmeübertrager und Regenerator nachgeschaltetem Nutzwärmeübertrager, für die Kühlung der Zuluft des zu klimatisierenden Raumes und entsprechenden Verbindungsleitungen zusammengesetzt.
Bei dieser Vorrichtung wird der Verdichtermotor mit Prozeßluft gekühlt, wobei diese bei Motordefekten mit Verbrennungsabgasen belastet werden würde. Weiterhin erfolgt die Entnahme der Prozeßluft aus der Umgebung, was bei niedrigen Außentemperaturen energetisch sehr nachteilig ist.

Der Erfindung liegt die Aufgabe zugrunde, ein Verfahren zum Heizen oder Kühlen eines Raumes zu entwickeln, womit der Jahresenergieverbrauch wesentlich gesenkt werden kann.

Erfindungsgemäß wird die Aufgabe durch die Merkmale des Anspruches 1 gelöst. Vorteilhafte Weiterbildung der Erfindung sind im Unteranspruch enthalten.

Bei den erfindungsgemäßen Verfahren handelt es sich um einen kombinierten Kühl- und Heizprozeß zum Klimatisieren eines Raumes insbesondere von Reisezugwagen, wonach entweder gekühlt oder geheizt werden kann.

Wenn der Raum nicht mehr gekühlt sondern geheizt werden soll, werden erfindungsgemäß zwei Ventile umgeschaltet, und die für die Kühlung erforderlichen Aggregate, Wärmeübertrager und Regenerator werden von der Prozeßluft ohne Wärmeaustausch durchströmt. Die vom Verdichter erwärmte Luft gelangt über eine Umgehungsleitung zum Nutzwärmeübertrager. Die im Nutzwärmeübertrager abgekühlte aber noch unter Druck stehende Luft wird über eine weitere Umgehungsleitung zur Eintrittsseite einer Turbine geleitet, wo sie entspannt wird und an die Umgebung abgegeben wird. Die Luft des zu beheizenden Raumes wird dabei von einem Vorverdichter angesaugt.

Nach einem bevorzugten Merkmal der Erfindung wird das beim Kühlprozeß im Nutzwärmeübertrager anfallende Kondenswasser, der aus Umluft- und Frischluft bestehenden Zuluft gemeinsam mit der Abluft einem Regenerator zugeführt, wodurch der Wirkungsgrad der Anlage wesentlich verbessert werden kann.

Ein weiteres bevorzugtes Merkmal der Erfindung besteht darin, daß für den Fall, daß beim Heizprozeß dem zu beheizenden Raum keine Frischluft zugeführt werden kann, die Saugseite des Vorverdichters zur Umgebung hin geöffnet wird.
Bei einer Vorrichtung zur Durchführung des Verfahrens handelt es sich um eine Anlage, die aus einem motorgetriebenen Vorverdichter, einer kombinierten Verdichter-Turbineneinheit mit zwischengeschaltetem Wärmeübertrager, bestehend aus Umgebungsluftwärmeübertrager und Regenerator, nachgeschalteten Nutzwärmeübertrager für die Kühlung der Zuluft eines zu klimatisierenden Raumes und entsprechenden Verbindungsleitungen besteht. Zwischen der Austrittsseite des Umgebungsluftwärmeübertragers und der Eintrittsseite des Nutzwärmeübertragers befindet sich eine Umgehungsleitung mit einem Umschaltventil und zwischen der Austrittsseite des Nutzwärmeübertragers und der Eintrittsseite der Turbine eine weitere Umgehungsleitung ebenfalls mit Umschaltventil.

Der Vorteil der Erfindung besteht darin, daß im Vergleich zu Heizung von Reisezugwagen mit elektrischen Widerstands-Heizkörpern und Kühlung durch Kaltdampfmaschinen der Energieverbrauch erheblich gesenkt werden kann und der Wirkungsgrad der Anlage wesentlich verbessert wird. Die Erfindung wird nachfolgend anhand von Ausführungsbeispielen näher erläutert werden.

In der Zeichnung zeigt die
Figur 1: die Schaltung zum Kühlen eines Raumes
Figur 2: die Schaltung zum Heizen eines Raumes.

Die Anlage besteht aus einem von einem Elektromotor 1 angetriebenen Vorverdichter 2, einem als zweite Stufe geschalteten Verdichter 3, der von der Expansionsturbine 4 angetrieben wird. Weiterhin sind ein Umgebungsluftwärmeübertrager 5 mit Regenerator 6, zwischen Verdichter 3 und Turbine 4 und ein Nutzwärmeübertrager 7 zum Kühlen oder Heizen des zu klimatisierenden Raumes 8 vorgesehen. Die einzelnen Elemente sind durch Rohrleitungen verbunden, die Ventile für das Umschalten vom Kühlen auf Heizen enthalten. Beim Kühlen wird die vom Verdichter 2 verdichtete Luft über die Leitung 9 dem Verdichter 3 zugeführt. Durch die Verdichtung erwärmt sie sich. Danach gelangt sie über die Leitung 10 durch die als Kühler wirkenden Wärmeübertrager 5 und Regenerator 6 sowie Leitung 11 in die Turbine 4. Durch die Entspannung wird die Luft auf eine Temperatur unterhalb der Umgebungstemperatur gekühlt. Die gekühlte Luft gelangt über die Leitungen 12 und 13 in den Nutzwärmeübertrager 7, in dem durch Wärmeaustausch die vom Lüfter 18 über die Kanäle 15 und 16 geführte Luft des Raumes 8 ebenfalls gekühlt wird.
Die Wirksamkeit des Regenerators 6 wird verbessert, indem diesem die im Nutzwärmeübertrager 7 kondensierende Luftfeuchtigkeit über die Leitung 32 zugeführt wird. Der für den Raum 8 erforderliche Frischluftanteil wird über den Kanal 20 durch entsprechende Einstellung der Klappe 19 aus der Umgebung angesaugt. Der in seiner Menge dem Frischluftstrom entsprechende Abluftstrom gelangt über den Kanal 17 zum Regenerator 6 und verbessert dort den bereits im Wärmeübertrager 5 erreichten Kühleffekt. Die Nutzwärmeübertrager erwärmte Luft aus der Leitung 13 gelangt über die Leitung 14 zum Verdichter 2, wodurch der Kreislauf geschlossen ist.

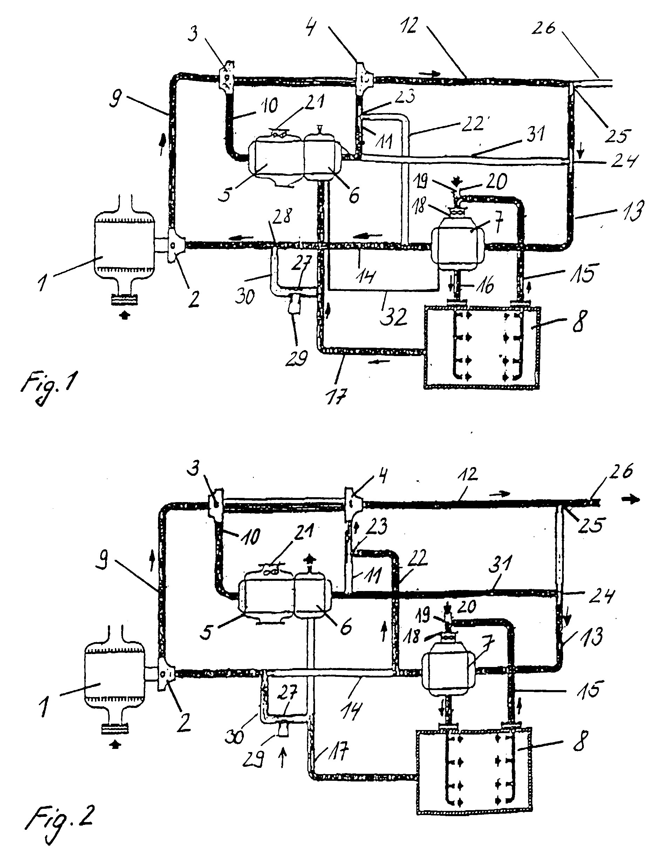

Für den Heizprozeß nach Figur 2 erfolgt eine Umschaltung der ventile 23 und 24 und eine Ausscheidung der Wirksamkeit des Wärmeübertragers 5 und des Regenerators 6, sodaß die vom Verdichter erwärmte Luft über die Umgehungsleitung 31 und die Leitung 13 zum Nutzwärmeübertrager 7 gelangt und dann über eine weitere Umgehungsleitung 22 zur Turbine strömt. Die expandierte Luft gelangt über die Leitung 12 durch Umschalten des Ventiles 25 über die Leitung 26 an die Umgebung. Die Luft des Raumes 8 wird im Nutzwärmeübertrager 7 erwärmt. Der Frischluftanteil der am Stutzen 20 eintritt, gelangt durch Umschalten des Ventiles 27 über die Leitungen 30 und 14 zum Saugstutzen des Verdichters 2. Am Stutzen 29 erfolgt das Ansaugen des Verdichters 2 aus der Umgebung. Das Ventil 28 wird dann umgeschaltet, wenn beim Aufheizvorgang dem Raum 8 keine Frischluft zugeführt werden soll.

## Patentansprüche

1. Verfahren zum Heizen oder Kühlen eines Raumes unter Verwendung eines Joule - Kreislaufprozesses mit Luft als Arbeitsmedium mittels einer kombinierten Verdichter- Turbineneinheit (3,4) mit zwischengeschaltetem Wärmeübertrager, der aus Umgebungsluftwärmeübertrager (5) und Regenerator (6) besteht, und nachgeschaltetem Nutzwärmeübertrager zum Kühlen bzw. Erwärmen des Raumes (8), wobei beim Kühlen die Komponenten des Kälteprozesses in einem geschlossenen Kreislauf angeschaltet sind,
dadurch gekennzeichnet, daß beim Heizen durch Umschalten von Ventilen die vom Verdichter (3) erwärmte Luft über eine Umgehungsleitung (31) von der Austrittsseite des Wärmeübertragers zum Nutzwärmeübertrager (7) gelangt und die darin abgekühlte, aber noch unter Druck stehende Luft über eine weitere Umgehungsleitung (22) zur Eintrittsseite der Turbine (4) geleitet und über ein Umschaltventil (25) an die Umgebung abgegeben wird, wobei der Umgebungsluftwärmeübertrager (5) und Regenerator (6) ausgeschaltet sind und die Prozeßluft diese ohne Wärmetausch durchströmt.

2. Verfahren nach Anspruch 1, dadurch gekennzeichnet, daß das beim Kühlprozeß im Nutzwärmeübertrager (7) anfallende Kondenswasser der aus Umluft- und Frischluft bestehenden Zuluft, gemeinsam mit der Abluft, über eine Leitung (32) ggf. unter Einschaltung einer Pumpe, dem Regenerator (6) zugeführt wird.

## Claims

1. Method of heating or cooling an area, using a Joule's cyclic process with air as the working medium, by means of a combined compressor-and-turbine unit (3, 4) with an interposed heat exchanger, which comprises ambient air heat exchanger (5) and regenerator (6), and with a subsequently added useful heat exhanger for cooling or respectively heating the area (8), the components of the low-temperature process being connected in a closed circuit during the cooling operation, characterised in that, during the heating operation, the air which is heated by the compressor (3) passes from the outlet end of the heat exchanger to the useful heat exchanger (7) via a bypass line (31) by a changing-over of valves, and the air which is cooled therein but is still under pressure, is conducted to the inlet end of the turbine (4) via an additional bypass line (22) and discharged to the atmosphere via a changeover valve (25), whereby the ambient air heat exchanger (5) and regenerator (6) are disconnected, and the process air flows therethrough without any exchange of heat.

2. Method according to claim 1, characterised in that the condensed water of the supply air, which comprises circulating air and fresh air, accumulates in the useful heat exchanger (7) during the cooling process and, together with the waste air, is supplied to the regenerator (6) via a line (32), possibly with the incorporation of a pump.

## Revendications

1. Procédé pour chauffer ou refroidir un espace en utilisant un circuit de Joule avec l'air comme fluide moteur, à l'aide d'une unité combinée compresseur-turbine (3, 4) dans laquelle est intercalé un échangeur de chaleur comprenant un échangeur de chaleur à air ambiant (5) et un régénérateur (6), et d'un échangeur de chaleur utile monté en aval pour refroidir ou chauffer l'espace (8), étant précisé que lors du refroidissement, les éléments du processus de refroidissement sont actionnés en circuit fermé,
caractérisé en ce que lors du chauffage, grâce à l'inversion de soupapes, l'air chauffé par le compresseur (3) arrive par une dérivation (31), à partir du côté sortie de l'échangeur de chaleur, dans l'échangeur de chaleur utile (7) et l'air qui est refroidi dans celui-ci mais qui est encore sous pression est amené par une seconde dérivation (22) jusqu'au côté entrée de la turbine (4) et évacué dans l'environnement par une soupape d'inversion (25), l'échangeur de chaleur à air ambiant (5) et le régénérateur (6) étant désactivés et l'air du circuit traversant ceux-ci sans échange de chaleur.

2. Procédé selon la revendication 1, caractérisé en ce que l'eau de condensation de l'air amené, formé d'air de circulation et d'air frais, qui est produite dans l'échangeur de chaleur utile (7) lors du refroidissement est amenée avec l'air sortant dans le régénérateur (6) par une canalisation (32), avec l'intervention éventuelle d'une pompe.
